# EUROPEAN PATENT APPLICATION

(11) **EP 4 763 898 A1**
(43) Date of publication of application: **24.06.2026**
(21) Application number: 24874290.0
(22) Date of filing: 29.03.2024
(51) Int. Cl.: C08J 11/10, B09B 3/35, B09B 3/70, B09B 5/00, B09B 101/67

(54) **METHOD FOR RECOVERING CONSTITUENT MEMBER OF USED ABSORBENT ARTICLE**

(30) Priority: 03.10.2023 JP 2023172353
(71) Applicant: Unicharm Corporation, Shikokuchuo-shi, Ehime 799-0111 (JP)
(72) Inventor: KONISHI, Takayoshi, Kanonji-shi, Kagawa 769-1602 (JP); KURITA, Noritomo, Kanonji-shi, Kagawa 769-1602 (JP)
(74) Representative: Staeger & Sperling Partnerschaftsgesellschaft mbB
(86) International application number: PCT/JP2024/013084
(87) International publication number: WO 2025/074671

(57) **Abstract**

Provided is a method for recovering a constituent member of a used absorbent article, the method being capable of reducing contaminants in the constituent member while suppressing an increase in cost. The present invention is a method for recovering a constituent member of a used absorbent article. This invention comprises: a dehydration and washing step (S3) for dehydrating and washing a mixture containing a highly-water-absorbent polymer having an acid group and a pulp fiber, which are constituent members, with a solution containing an oxidizing agent and a dehydrating agent capable of dehydrating the highly-water-absorbent polymer and the pulp fiber; and a separation step (S4) for separating at least the highly-water-absorbent polymer and the pulp fiber from the solution containing the mixture.

## Description

### FIELD

The present invention relates to a method of collecting a constituent member of a used absorbent article.

### BACKGROUND

Methods of collecting constituent members of used absorbent articles are known. For example, Patent Literature 1 discloses a method of recycling a water-absorbent resin derived from a used absorbent article, characterized by discharging absorbed liquid from the water-absorbent resin comprising the absorbed liquid and restoring the waterabsorbing ability of the water-absorbent resin. This method comprises (i) an immersion step in which the used absorbent article comprising a water-absorbent resin that has absorbed an absorbed liquid is immersed in an immersion liquid comprising a hydrophilic organic solvent; (ii) a crushing step in which, during or before the immersion step, the used absorbent article is crushed to form crushed materials; and (iii) a separation step in which the water-absorbent resin is separated from the mixture of the immersion liquid and the crushed materials. Patent Literature 1 describes that in step (iii), one or more members selected from pulp, nonwoven fabric, and adhesive may be further separated and collected, and that a sterilization/disinfection step of sterilizing and/or disinfecting the water-absorbent resin may be performed in parallel with or after the immersion step. Patent Literature 1 indicates that examples of the used absorbent articles from which constituent members are collected include used sanitary materials that have absorbed liquids (absorbed liquid) such as urine and blood.

### [CITATION LIST]

### [PATENT LITERATURE]

[PTL 1] WO 2021/162082 A

### SUMMARY

### [TECHNICAL PROBLEM]

From the viewpoint of reducing environmental impact and ensuring sustainable consumption and production patterns, it is desirable that not only absorbent articles containing excrement but also absorbent articles which do not contain excrement be included as used absorbent articles to be subjected to constituent member collection. Examples of absorbent articles which do not contain excrement include absorbent articles that have been used but do not contain excrement, absorbent articles that have been sold but unused, and absorbent articles that have been produced or stored but then discarded. In such cases, the used absorbent articles may have become contaminated with various contaminants, such as excrement, sebum, bacteria, odorous substances, and colored substances derived therefrom, machine oil from production equipment, and various organic substances.

In Patent Literature 1, the used absorbent articles serving as the target of constituent member collection are defined as used sanitary materials that have absorbed liquids such as urine and blood. Thus, even if treatments in the sterilization/disinfection steps can sterilize/disinfect the constituent members of the used absorbent articles, there is a risk that various contaminants in the constituent members may not be completely reduced. In such a case, there is a risk that the collected constituent members cannot be safely and securely reused for various purposes.

However, in cases in which such various contaminants cannot be completely reduced, newly adding steps of reducing these contaminants may result in an increase in the cost of constituent member collection.

Thus, an object of the present invention is to provide a method of collecting a constituent member of a used absorbent article which can reduce contaminants in the constituent member while suppressing increases in cost.

### [SOLUTION TO PROBLEM]

The present invention provides a method of collecting a constituent member of a used absorbent article, the method comprising a dehydration and washing step of dehydrating and washing a mixture comprising a superabsorbent polymer having an acid group, and a pulp fiber, each being the constituent member, with a solution comprising a dehydrating agent capable of dehydrating the superabsorbent polymer and the pulp fiber and an oxidizing agent, and a separation step of separating at least the superabsorbent polymer and the pulp fiber from the solution comprising the mixture.

### [ADVANTAGEOUS EFFECTS OF INVENTION]

According to the present invention, there can be provided a method of collecting a constituent member of a used absorbent article which can reduce contaminants in the constituent member while suppressing increases in cost.

### BRIEF DESCRIPTION OF DRAWINGS

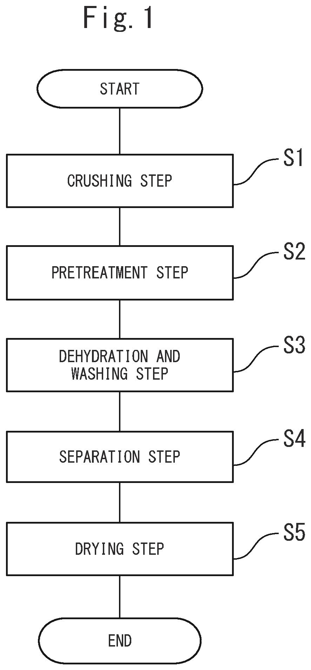

FIG. 1 is a flow diagram illustrating an example of a method of collecting a constituent member of a used absorbent article according to an embodiment.

### DESCRIPTION OF EMBODIMENTS

The present embodiment relates to the following aspects.

[Aspect 1] A method of collecting a constituent member of a used absorbent article, the method comprising: a dehydration and washing step of dehydrating and washing a mixture comprising a superabsorbent polymer having an acid group, and a pulp fiber, each being the constituent member, with a solution comprising a dehydrating agent capable of dehydrating the superabsorbent polymer and the pulp fiber and an oxidizing agent, and a separation step of separating at least the superabsorbent polymer and the pulp fiber from the solution comprising the mixture.

In the present method, dehydration and washing of at least each of the superabsorbent polymer having an acid group and the pulp fiber are performed simultaneously using a dehydrating agent and an oxidizing agent simultaneously. Specifically, the dehydrating agent can remove the moisture which has been absorbed by each of the superabsorbent polymer and pulp fiber and which may contain contaminants. Simultaneously, the oxidizing agent can reduce the contaminants contained in each of the superabsorbent polymer and pulp fiber (for example, excrement, sebum, bacteria, odorous substances, and colored substances derived therefrom, machine oil from production equipment, and various organic substances). As a result, contaminants in at least each of the superabsorbent polymer and pulp fiber can be reduced. Furthermore, since dehydration and washing are performed simultaneously to suppress the increase in the number of steps, increases in cost associated with these treatments can be suppressed. Thus, in the method of collecting a constituent member of a used absorbent article, contaminants in the constituent member can be reduced while suppressing increases in cost.

[Aspect 2] The method according to Aspect 1, wherein the oxidizing agent comprises at least one among ozone, hydrogen peroxide, and a chlorine-based substance.

In the present method, at least one among ozone, hydrogen peroxide, and a chlorine-based substance, which have strong oxidizing power, are included as the oxidizing agent. Thus, contaminants contained in each of the superabsorbent polymer and pulp fiber can more reliably be reduced.

[Aspect 3] The method according to Aspect 1 or 2, wherein the dehydrating agent comprises a ketone-based organic solvent.

In the present method, a ketone-based organic solvent, which is resistant to oxidation even by highly oxidizing agents, is included as the dehydrating agent. Thus, the moisture which has been absorbed by each of the superabsorbent polymer and pulp fiber and which may contain contaminants can more reliably be removed without being affected by the oxidizing power of the oxidizing agent.

[Aspect 4] The method according to any one of Aspects 1 to 3, wherein the oxidizing agent comprises one of an active species generated by irradiating another oxidizing agent included in the solution with ultraviolet rays, and, an active species generated by, when the solution comprises water, irradiating the water and/or another oxidizing agent included in the solution with ultraviolet rays.

In the present method, an active species having strong oxidizing power, i.e., an active species generated by irradiating another oxidizing agent with ultraviolet rays, or, when the solution comprises water, an active species generated by irradiating the water and/or another oxidizing agent included in the solution with ultraviolet rays is included as the oxidizing agent. Thus, contaminants contained in each of the superabsorbent polymer and pulp fiber can more reliably be reduced.

[Aspect 5] A method according to any one of Aspects 1 to 4, wherein the separation step comprises: a step of separating the superabsorbent polymer and the pulp fiber together from the solution comprising the mixture, and a step of further separating the superabsorbent polymer and the pulp fiber that have been separated together from each other.

In the present method, the superabsorbent polymer and pulp fiber separated together have already been dehydrated and washed. Thus, by separating the superabsorbent polymer and pulp fiber from each other, reusable superabsorbent polymer and pulp fiber can be obtained without further washing. Specifically, a superabsorbent polymer and a pulp fiber each with reduced contaminants can be obtained while suppressing an increase of a washing step and thus increases in cost.

[Aspect 6] A method according to any one of Aspects 1 to 5, wherein the dehydration and washing step comprises a step of dehydrating and washing the mixture, which further comprises a plastic material, which is the constituent member, with the solution, and the separation step comprises a step of separating the plastic material from the solution comprising the mixture, separately from the superabsorbent polymer and the pulp fiber.

In the present method, the superabsorbent polymer, the pulp fiber, and a plastic material separated together have already been dehydrated and washed. Thus, by separating at least the plastic material from the superabsorbent polymer, the pulp fiber, and the plastic material, a reusable plastic material can be obtained without further washing. Specifically, a plastic material with reduced contaminants can be obtained while suppressing increases in cost.

[Aspect 7] The method according to any one of Aspects 1 to 6, further comprising, before the dehydration and washing step, a pretreatment step of reducing moisture absorbed by the used absorbent article.

The present method comprises, before the dehydration and washing step, a pretreatment step of reducing moisture absorbed by the used absorbent article. Thus, the amount of moisture in the used absorbent article that must be treated in the dehydration and washing step can be reduced in advance in the pretreatment step. As a result, contaminants contained in each of the superabsorbent polymer and pulp fiber can more reliably be reduced in the dehydration and washing step.

[Aspect 8] The method according to Aspect 7, wherein in the pretreatment step, at least one of an acidic aqueous solution treatment, a polyvalent metal salt treatment, a high-pressure steam treatment, a freeze-drying treatment, and an organic solvent treatment is performed on the used absorbent article.

In the present method, at least one of an acidic aqueous solution treatment, a polyvalent metal salt treatment, a high-pressure steam treatment, a freeze-drying treatment, and an organic solvent treatment is performed on the used absorbent article as the pretreatment step before the dehydration and washing step. As a result, the moisture in the used absorbent article that must be treated in the dehydration and washing step can more reliably be reduced in advance in the pretreatment step.

[Aspect 9] The method according to Aspect 8, wherein the pretreatment step comprises a step of performing the acidic aqueous solution treatment on the used absorbent article to inactivate the superabsorbent polymer with an acidic aqueous solution, and the dehydration and washing step comprises a step of activating the inactivated superabsorbent polymer with alkali metal ions supplied from an alkali metal ion supply source.

In the present method, by performing an acidic aqueous solution treatment as a pretreatment step, the superabsorbent polymer is inactivated with the acidic aqueous solution, whereby the moisture absorbed by the superabsorbent polymer can more appropriately be reduced (removed). Specifically, the amount of moisture in the used absorbent article that must be treated in the dehydration and washing step can more appropriately be reduced in advance. Additionally, by using an alkali metal ion source in the dehydration and washing step, the superabsorbent polymer can be reactivated with alkali metal ions while remaining in a dehydrated state. Since the reactivated superabsorbent polymer has not absorbed moisture, subsequent handling can be simplified, for example, drying thereof can easily be performed. As a result, a reactivated superabsorbent polymer in which contaminants are reduced can be obtained while suppressing increases in cost.

[Aspect 10] The method according to Aspect 8, wherein the pretreatment step comprises a step of performing the polyvalent metal salt treatment on the used absorbent article to inactivate the superabsorbent polymer with polyvalent metal ions supplied from a polyvalent metal salt, the method further comprising, before the dehydration and washing step or during the dehydration and washing step, a step of substituting the polyvalent metal ions with an acidic substance in the inactivated superabsorbent polymer, and during the dehydration and washing step, a step of neutralizing, using an alkaline substance comprising sodium, the superabsorbent polymer in which the polyvalent metal ions have been substituted with the acidic substance.

In the present method, by performing a polyvalent metal salt treatment as a pretreatment step, the superabsorbent polymer is inactivated with the polyvalent metal ions, whereby the moisture absorbed by the superabsorbent polymer can more appropriately be reduced (removed). Specifically, the amount of moisture in the used absorbent article that must be treated in the dehydration and washing step can more appropriately be reduced. In addition, the polyvalent metal ions in the superabsorbent polymer are substituted with an acidic substance (acidic aqueous solution) before or during the dehydration and washing step, and thereafter, during the dehydration and washing step, the superabsorbent polymer in which the polyvalent metal ions have been substituted with the acidic substance is neutralized with an alkaline substance (alkaline aqueous solution) comprising sodium, the inactivated superabsorbent polymer can be reactivated in addition to being dehydrated and washed. As a result, a reactivated superabsorbent polymer in which contaminants are reduced can be obtained while suppressing increases in cost.

[Aspect 11] The method of any one of Aspects 1 to 10, further comprising a crushing step of crushing the used absorbent article, wherein the crushing step is performed before the separation step and any of before, during, and after the dehydration and washing step.

In the present method, the crushing step of crushing the used absorbent article is performed before the separation step and any of before, during, and after the dehydration and washing step. As a result, in the separation step, at least the superabsorbent polymer and the pulp fiber can more reliably be separated from the solution comprising the mixture.

[Aspect 12] The method of any one of Aspects 1 to 11, further comprising a drying step of drying at least the superabsorbent polymer and the pulp fiber, wherein the drying step is performed at least one of after the dehydration and washing step and after the separation step.

In the present method, the drying step of drying the superabsorbent polymer and the pulp fiber is performed at least one of after the dehydration and washing step and after the separation step. Therefore, since the superabsorbent polymer and the pulp fiber are dehydrated in advance in the dehydration and washing step, drying is facilitated, whereby the energy required for drying can be reduced and the superabsorbent polymer and the pulp fiber can easily be treated in subsequent steps or can easily be reused. Thus, the treatment burden in the subsequent steps can be reduced, and treatment cost can be reduced.

[Aspect 13] The method according to any one of Aspects 1 to 12, further comprising a resupply step of collecting the dehydrating agent from the solution after the separation step and supplying the dehydrating agent to the dehydration and washing step.

The present method further comprises a step of collecting the dehydrating agent from the solution after the separation step and supplying the dehydrating agent to the dehydration and washing step. As a result, in the method of collecting a constituent member of a used absorbent article, contaminants can be reduced while suppressing increases in cost.

The method of collecting a constituent member of a used absorbent article according to an embodiment will be described below. This collection method can also be considered a method of generating a reusable constituent member, and in other words, a method of producing a recycled constituent member (for example, a recycled superabsorbent polymer, a recycled pulp fiber).

The used absorbent articles include absorbent articles that have been used, for example, those comprising or not comprising excrement, as well as unused but discarded absorbent articles, for example, those that were transferred but unused and those that were produced or stored but then discarded (factory loss, storage loss, etc.). Absorbent articles include those comprising a superabsorbent polymer and a pulp fiber as absorbent materials, such as disposable diapers, urine absorption pads, sanitary napkins, bed sheets, and pet sheets. Recycled superabsorbent polymer refers to a superabsorbent polymer which is derived from a used absorbent article and which has been collected and regenerated from a used absorbent article. Recycled pulp fiber refers to a pulp fiber which is derived from a used absorbent article and which has been collected and regenerated from a used absorbent article. Used absorbent articles contain contaminants. Examples of the contaminants include excrement, sebum, bacteria, odorous substances, and colored substances derived therefrom, machine oil from production equipment, and various organic substances.

First, an example of the configuration of an absorbent article will be described. The absorbent article comprises a top sheet, a back sheet, and an absorbent body disposed between the top sheet and the back sheet. An example of the size of the absorbent article is a length of approximately 15 to 100 cm and a width of 5 to 100 cm. The absorbent article may further comprise other members that are commonly provided in absorbent articles, such as a diffusion sheet, leak-proof walls, side sheets, or an exterior sheet.

The material of the top sheet is not particularly limited as long as it can be used in an absorbent article, and examples thereof include liquid-permeable nonwoven fabrics, synthetic resin films having liquid-permeable holes, and composite sheets thereof. The material of the back sheet is not particularly limited as long as it can be used in an absorbent article, and examples thereof include liquid-impermeable nonwoven fabrics, liquid-impermeable synthetic resin films, and composite sheets thereof. The material of the diffusion sheet is not particularly limited as long as it can be used in an absorbent article, and examples thereof include liquid-permeable nonwoven fabrics. The materials of the leak-proof walls, side sheets, and exterior sheets are not particularly limited as long as they can be used in an absorbent article, and examples thereof include liquid-impermeable nonwoven fabrics. The materials of the nonwoven fabric and synthetic resin film are not particularly limited as long as they can be used in an absorbent article, and examples thereof include synthetic resins. Examples of synthetic resins include olefinbased resins such as polyethylene and polypropylene, polyamide-based resins such as 6-nylon and 6,6-nylon, and polyester-based resins such as polyethylene terephthalate (PET) and polybutylene terephthalate (PBT). Natural fibers such as cotton and rayon may be used as a material for the nonwoven fabric. In the present embodiment, at least the nonwoven fabric and the synthetic resin described above film are referred to as plastic materials.

Examples of the material of the absorbent body include absorbent materials, and specifically, pulp fibers and superabsorbent polymers. The pulp fiber is not particularly limited as long as it can be used in an absorbent article, and examples thereof include cellulosic fibers. Examples of cellulosic fibers include wood pulp, crosslinked pulp, nonwood pulp, regenerated cellulose, and semi-synthetic cellulose. Examples of the size of the pulp fiber include an average value of the major diameter of the fiber of several tens of µm, and 20 to 40 µm is preferable, as well as an average fiber length of several mm, and 2 to 5 mm is preferable. The superabsorbent polymer (SAP) is not particularly limited as long as it can be used in an absorbent article and has an acid group, and examples thereof include those comprising a carboxyl group, a sulfo group, etc., and those comprising a carboxyl group are preferable. Examples thereof include polyacrylate-based absorbent polymers (comprising a carboxyl group), polysulfonate-based absorbent polymers (comprising a sulfo group, etc.), and polymaleic anhydride-based absorbent polymers (comprising a carboxyl group). The size of the superabsorbent polymer (when dry) can be, for example, an average particle size of several hundred µm, with 200 to 500 µm being preferable. The absorbent body may comprise a core wrap sheet which is formed from a liquid-permeable sheet such as tissue, for encapsulating the absorbent material.

One side of the absorbent body is bonded to the top sheet and the other side to the back sheet, each via an adhesive. In a plan view, the portion of the top sheet (peripheral portion) extending outward from the absorbent body so as to surround the absorbent body is bonded via an adhesive to the portion of the back sheet (peripheral portion) extending outward from the absorbent body so as to surround the absorbent body. Thus, the absorbent body is enclosed within the bonded body of the top sheet and back sheet. When the absorbent body comprises a core wrap sheet, the absorbent material is bonded to the core wrap sheet via an adhesive. The diffusion sheet, leak-proof walls, side sheets, and exterior sheet are also each bonded to other constituent members via an adhesive. The adhesive is not particularly limited as long as it can be used in an absorbent article, and examples thereof include hot-melt adhesives. Examples of hot-melt adhesives include pressure-sensitive adhesives or heat-sensitive adhesives based on rubbers such as styrene-ethylene-butadiene-styrene, styrene-butadiene-styrene, and styreneisoprene-styrene, or based on olefins such as polyethylene.

As described above, an absorbent article having the configuration described above contains some or all of the contaminants described above at the stage of a used absorbent article.

Next, a method of collecting a constituent member of a used absorbent article according to an embodiment will be described. Some or all of the constituent members of the used absorbent article collected by this collection method are recycled (reused) as materials for various products.

FIG. 1 is a flow diagram illustrating an example of a method of collecting a constituent member of a used absorbent article according to an embodiment.

The method of collecting a constituent member of a used absorbent article comprises a dehydration and washing step S3 and a separation step S4, and may further comprise at least one of a crushing step S1, a pretreatment step S2, and a drying step S5. Each step will be described in detail below.

The crushing step S1 is a step of crushing the used absorbent article. The crushing device is not particularly limited as long as it can expose the internal superabsorbent polymer and pulp fiber, and examples thereof include biaxial crushers (for example, biaxial rotary crushers, biaxial differential crushers, and biaxial shear crushers). As a result, the used absorbent article is partially or wholly shredded, whereby a plurality of small pieces each comprising one or a plurality of constituent members are generated. The size of the small piece is not particularly limited as long as the small piece can be handled in subsequent steps, and examples thereof include a square having 1 to 10 cm sides in a plan view or equivalent sizes (approximately the same area). Crushing as used herein also refers to the case where the sheets (for example, the top sheet, back sheet, and exterior sheet) constituting the outer surface of the used absorbent article are torn to release the internal superabsorbent polymer and pulp fiber to the outside thereof. In this case, the plurality of small pieces may include one or more pieces of the torn sheets, and one or more masses comprising released superabsorbent polymer and pulp fiber.

The crushing step S1 may be performed in air or in a liquid. When the crushing step S1 is performed in a liquid, examples of the liquid include water and the aqueous solution used in the pretreatment step S2, specifically, an acidic aqueous solution (which will be described later) and a polyvalent metal salt aqueous solution (which will be described later). Thus, when an acidic aqueous solution or polyvalent metal salt aqueous solution is used as the liquid, it can be said that the crushing step S1 and the pretreatment step S2 are performed simultaneously.

The crushing step S1 is primarily performed to facilitate separation of the one or more constituent members of the used absorbent article from other constituent members in the separation step S4, and thus, needs only to be performed before the separation step S4. Therefore, the crushing step S1 needs only to be performed before the separation step S4, and before the dehydration and washing step S3, during the dehydration and washing step S3, or after the dehydration and washing step S3. Note that "before the dehydration and washing step S3" means before the pretreatment step S2, during the pretreatment step S2, or after the pretreatment step S2.

When the crushing step S1 is not performed and an uncrushed used absorbent article is used as-is in the dehydration and washing step S3 (with or without the pretreatment step S2), if, for example, an organic solvent (which will be described later) is used as the dehydrating agent, the adhesive of the used absorbent article can be dissolved in the organic solvent, whereby the used absorbent article can be decomposed into its individual constituent members.

The pretreatment step S2 is a step of reducing the moisture absorbed by the used absorbent article (in particular, the superabsorbent polymer) performed on the used absorbent article that has been crushed via the crushing step S1 or that has not been crushed, i.e., a step of dehydrating the used absorbent article. Since the pretreatment step S2 is a step which is performed before the dehydration and washing step S3, it is sufficient that the used absorbent article or the crushed used absorbent article be dehydrated to a certain extent, and complete dehydration is not necessarily required. The ratio of moisture to be removed can be, for example, 10 to 90% by mass of the moisture absorbed by the used absorbent article.

The pretreatment step S2 is specifically a step in which the used absorbent article is subjected to at least one of acidic aqueous solution treatment, polyvalent metal salt treatment, high-pressure steam treatment, freeze-drying treatment, and organic solvent treatment as the pretreatment. These treatments are treatments for dehydrating the superabsorbent polymer. The acidic aqueous solution treatment is a treatment in which the superabsorbent polymer is brought into contact with an acidic aqueous solution. The polyvalent metal salt treatment is a treatment in which the superabsorbent polymer is brought into contact with an aqueous solution comprising a polyvalent metal salt. The high-pressure steam treatment is a treatment in which the superabsorbent polymer is brought into contact with high-pressure steam. The freeze-drying treatment is a treatment in which the superabsorbent polymer is exposed to a low-temperature, dry atmosphere. The organic solvent treatment is a treatment in which the superabsorbent polymer is brought into contact with a hydrophilic organic solvent. Known methods can be used as each of these treatments, and in particular, the acidic aqueous solution treatment and polyvalent metal salt treatment are as described below.

The step of the acidic aqueous solution treatment performed as the pretreatment step S2 is a step of inactivating the superabsorbent polymer of the used absorbent article with an acidic aqueous solution. For example, the used absorbent article (whether or not subjected to crushing in the crushing step S1) is immersed in an acidic aqueous solution to bring the superabsorbent polymer into contact with the acid to inactivate the superabsorbent polymer. The acidic aqueous solution treatment is preferable as compared to the polyvalent metal salt treatment from the viewpoint of a reduced likelihood of ash residue.

The acid (inactivator) in the acidic aqueous solution is not particularly limited, and examples thereof include acidic substances such as inorganic acids and organic acids. Examples of inorganic acids include sulfuric acid, hydrochloric acid, and nitric acid, and sulfuric acid is preferable from the viewpoints of a lack of chlorine and cost. Examples of organic acids include carboxylic acids having multiple carboxyl groups (for example, citric acid), carboxylic acids having one carboxyl group (for example, acetic acid), and sulfonic acids (for example, methanesulfonic acid). The organic acid preferably has multiple carboxyl groups, and is more preferably citric acid, from the viewpoints of ease of forming a chelate complex with divalent or higher metals (for example, calcium) contained in excrement and reduced likelihood of ash residue in the superabsorbent polymer and the pulp fiber. The acid concentration in the acidic aqueous solution is not particularly limited as long as the dehydrating function thereof can be exhibited, and may be, for example, 0.1 to 30% by mass. In order to efficiently inactivate the superabsorbent polymer, it is preferable that the acid (inactivator) have an acid dissociation constant (pKₐ, in water) less than the acid dissociation constant (pKₐ, in water) of the acid group in the superabsorbent polymer.

The acidic aqueous solution preferably has a pH within a predetermined range. The upper limit of the pH is preferably 6.0, and more preferably 5.0. By adopting a pH of 6.0 or less, dehydration of the superabsorbent polymer is facilitated. The lower limit of the pH is preferably 0.5, and more preferably 1.0. By adopting a pH of 0.5 or more, damage to the pulp fiber, which is another collection target, is suppressed. The pH is measured at 25°C using, for example, a twin pH meter AS-711 manufactured by Horiba, Ltd.

The specific configuration of the device for performing the acidic aqueous solution treatment is not particularly limited as long as the superabsorbent polymer can be immersed in the acidic aqueous solution. The device comprises, for example, a tank which can store the acidic aqueous solution and in which a used absorbent article (or a crushed used absorbent article) comprising the superabsorbent polymer can be placed, a supply means which can supply the acidic aqueous solution into the tank, and a stirring means which can stir the acidic aqueous solution in the tank.

In the acidic aqueous solution treatment, the temperature of the acidic aqueous solution is not particularly limited and may be, for example, room temperature (25°C). To accelerate the reaction rate, the acidic aqueous solution may be heated within a temperature range lower than 100°C. The treatment time is not particularly limited and may be, for example, about 5 to 60 minutes.

When an acidic aqueous solution treatment step is performed as the pretreatment step S2, a reactivation treatment step in which the superabsorbent polymer inactivated by the acidic aqueous solution treatment is activated using alkali metal ions supplied from an alkali metal ion supply source is then performed. The reactivation treatment step may be performed before the dehydration and washing step S3. Alternatively, the reactivation treatment step may be included in the dehydration and washing step S3, and thus, may be performed during the dehydration and washing step S3. In this case, an aqueous solution comprising an alkali metal ion supply source is added to the solution in the dehydration and washing step S3. Alternatively, the reactivation treatment step may be performed after the dehydration and washing step S3.

Specifically, the reactivation treatment reactivates the inactivated superabsorbent polymer with alkali metal ions in an alkaline aqueous solution, which is an aqueous solution comprising an alkali metal ion supply source. At this time, the H ions in the superabsorbent polymer are substituted with alkali metal ions, whereby the inactivated superabsorbent polymer is neutralized to be a reactivated superabsorbent polymer. Specifically, the moisture-absorbing ability of the superabsorbent polymer is restored. When the reactivation treatment step is performed during the dehydration and washing step S3, since a dehydrating agent is present around the reactivated superabsorbent polymer, the reactivated superabsorbent polymer will not absorb water.

Examples of alkali metal ions include lithium ions, sodium ions, and potassium ions, as well as combinations thereof. The alkali metal ion supply source is not particularly limited as long as it can supply these alkali metal ions, and examples thereof include hydroxides of alkali metals and salts of hydroxides of alkali metals with acids having a greater acid dissociation constant than the acid group of the superabsorbent polymer. Examples of hydroxides of alkali metals include lithium hydroxide, sodium hydroxide, and potassium hydroxide, as well as combinations thereof. Examples of salts include lithium carbonate, sodium carbonate, potassium carbonate, lithium bicarbonate, sodium bicarbonate, potassium bicarbonate, lithium chloride, sodium chloride, and potassium chloride. The aqueous solution comprising the alkali metal ion supply source is preferably neutral or alkaline, and more preferably alkaline. The concentration of the alkali metal ion supply source in the alkaline aqueous solution is not particularly limited as long as the superabsorbent polymer can be reactivated thereby. When an alkali metal hydroxide is used as the alkali metal ion supply source, the concentration may be, for example, 0.5 to 50% by mass.

The specific configuration of the device for performing the reactivation treatment is not particularly limited as long as the inactivated superabsorbent polymer can be immersed in the alkaline aqueous solution. The device comprises, for example, a tank which can store the alkaline aqueous solution and in which a used absorbent article (or a crushed used absorbent article) comprising the superabsorbent polymer can be placed, a supply means which can supply the alkaline aqueous solution into the tank, and a stirring means which can stir the alkaline aqueous solution in the tank.

In the reactivation treatment, the temperature of the alkaline aqueous solution is not particularly limited, and may be, for example, room temperature (25°C). To accelerate the reaction rate, the alkaline aqueous solution may be heated within a temperature range lower than 100°C. The treatment time is not particularly limited, and may be, for example, about 5 to 60 minutes.

The step of performing the polyvalent metal salt treatment as the pretreatment step S2 is a step in which the superabsorbent polymer of the used absorbent article is inactivated with polyvalent metal ions supplied from a polyvalent metal salt. For example, in this step, the used absorbent article (whether or not subjected to crushing in the crushing step S1) is immersed in a polyvalent metal salt aqueous solution to bring the superabsorbent polymer into contact with the polyvalent metal ions to inactivate the superabsorbent polymer. The polyvalent metal salt treatment is preferable as compared to the acidic aqueous solution treatment in that dehydration proceeds more easily.

The polyvalent metal salt in the polyvalent metal salt aqueous solution is not particularly limited, and examples thereof include alkaline earth metal salts and transition metal salts. Examples of alkaline earth metal salts include salts of beryllium, magnesium, calcium, strontium, and barium. Calcium chloride, calcium nitrate, magnesium chloride, and magnesium nitrate are preferable, and calcium chloride is more preferable. Examples of transition metal salts include salts of iron, cobalt, nickel, copper, and aluminum, and inorganic or organic acid salts are preferable. Examples of inorganic acid salts include iron chloride, iron sulfate, iron phosphate, iron nitrate, cobalt chloride, cobalt sulfate, cobalt phosphate, cobalt nitrate, nickel chloride, nickel sulfate, copper chloride, copper sulfate, and aluminum sulfate. Examples of organic acid salts include iron lactate, cobalt acetate, cobalt stearate, nickel acetate, and copper acetate. The concentration of the polyvalent metal salt in the polyvalent metal salt aqueous solution is not particularly limited as long as the dehydration function can be exhibited, and can be, for example, 0.1 to 10 mass % when an alkaline earth metal salt is used as the polyvalent metal.

The specific configuration of the device for performing the polyvalent metal salt treatment is not particularly limited as long as the superabsorbent polymer can be immersed in the polyvalent metal salt aqueous solution. The device comprises, for example, a tank which can store the polyvalent metal salt aqueous solution and in which the used absorbent article (or a decomposed used absorbent article) comprising the superabsorbent polymer can be placed, a supply means which can supply the polyvalent metal salt aqueous solution into the tank, and a stirring means which can stir the polyvalent metal salt aqueous solution in the tank.

In the polyvalent metal salt treatment, the temperature of the polyvalent metal salt aqueous solution is not particularly limited and can be, for example, room temperature (25°C). To accelerate the reaction rate, the polyvalent metal salt aqueous solution can be heated within a temperature range lower than 100°C. The treatment time is not particularly limited and can be, for example, about 10 to 120 minutes. The pH of the polyvalent metal salt aqueous solution is not particularly limited and can be, for example, 11 or less. When an alkaline compound is used, the pH of the aqueous solution is preferably greater than 7 and 11 or less.

When the polyvalent metal salt treatment is performed as the pretreatment step S2, the superabsorbent polymer that has been inactivated by the polyvalent metal salt treatment is subsequently subjected to a step of substituting the polyvalent metal ions with an acidic substance (acidic aqueous solution) (acidic substance substitution treatment), followed by a step of neutralizing the superabsorbent polymer in which the polyvalent metal ions have been substituted with the acidic substance using an alkaline substance (alkaline aqueous solution) comprising sodium (alkaline substance neutralization treatment). The step of substituting the polyvalent metal ions with an acidic substance is performed before the dehydration and washing step S3 or during the dehydration and washing step S3. When this step is performed during the dehydration and washing step S3, an aqueous solution comprising the acidic substance is added to the solution of the dehydration and washing step S3. The step of neutralizing the superabsorbent polymer using an alkaline substance is performed after the step of substituting the polyvalent metal ions with an acidic substance, and during the dehydration and washing step or after the dehydration and washing step S3. When this step is performed during the dehydration and washing step S3, an aqueous solution comprising an alkaline substance comprising sodium is added to the solution of the dehydration and washing step S3.

The step of substituting polyvalent metal ions with an acidic substance (acidic substance substitution treatment) performed for the superabsorbent polymer that has been inactivated by the polyvalent metal salt treatment is essentially the same as the acidic aqueous solution treatment described above. However, the acid in the acidic aqueous solution is preferably a strong inorganic acid. Examples of such inorganic acids include sulfuric acid, hydrochloric acid, and nitric acid, and sulfuric acid is preferable from the viewpoints of a lack of chlorine and cost.

The step of neutralizing the superabsorbent polymer in which the polyvalent metal ions have been substituted with an acidic substance using an alkaline substance (alkaline substance neutralization treatment) described above is substantially the same as the reactivation treatment described above. However, the alkali metal ion supply source is an alkaline substance comprising sodium, such as sodium hydroxide, and the alkali metal ions in the alkaline aqueous solution that comprises the alkali metal ion supply source are sodium ions.

In the pretreatment step S2, the ratio of the absorbent article (or plurality of small pieces) in the aqueous solution used in the various treatments is not particularly limited as long as the various treatments can be performed. Examples of this ratio include 0.1 to 50% by mass, and 1 to 40% by mass is preferable. By setting this ratio to 0.1% by mass or more, the treatments can efficiently proceed. By setting this ratio to 50% by mass or less, the various treatments can proceed easily.

The pretreatment step S2 preferably comprises a step of separating and removing moisture generated in the pretreatment step S2 before the dehydration and washing step S3. For example, the moisture generated in the pretreatment step S2 is separated and removed by filtering the aqueous solution comprising the used absorbent article (or plurality of small pieces) in the pretreatment step S2 via a screen or the like. By removing the moisture once before the dehydration and washing step S3 in this manner, the solution comprising the dehydrating agent and oxidizing agent (which will be described later) in the dehydration and washing step S3 is not diluted, whereby treatment can be performed at the desired concentration.

The dehydration and washing step S3 is a step in which the mixture comprising the superabsorbent polymer having an acid group, and the pulp fiber, each being the constituent member of the used absorbent article, is dehydrated and washed with a solution comprising a dehydrating agent capable of dehydrating the superabsorbent polymer and pulp fiber and an oxidizing agent.

The mixture comprising the superabsorbent polymer and pulp fiber, each being the constituent member, is not particularly limited as long as it comprises the superabsorbent polymer and the pulp fiber of the used absorbent article. For example, the mixture may be a used absorbent article that has been subjected to neither the crushing step S1 nor the pretreatment step S2. When the used absorbent article has been subjected to the crushing step S1, the mixture is a plurality of small pieces, formed by crushing the used absorbent article, which comprise the superabsorbent polymer and the pulp fiber, wherein the superabsorbent polymer and pulp fiber have not been individually separated. When the used absorbent article has been subjected to the pretreatment step S2, the mixture is a pretreated used absorbent article which comprises the superabsorbent polymer and the pulp fiber dehydrated to a certain extent, wherein the superabsorbent polymer and pulp fiber have not been individually separated. When the used absorbent article has been subjected to both the crushing step S1 and the pretreatment step S2, the mixture is a plurality of small pieces which have been pretreated and comprise the superabsorbent polymer and the pulp fiber dehydrated to a certain extent, wherein the superabsorbent polymer and pulp fiber have not been individually separated. The mixture may be a mixture comprising the superabsorbent polymer and the pulp fiber independently prepared in advance, regardless of the crushing step S1 or the pretreatment step S2.

The mixture may further comprise a plastic material, which is a constituent member of the used absorbent article. In this case, the dehydration and washing step S3 is a step in which the mixture comprising the superabsorbent polymer, the pulp fiber, and the plastic material, which are constituent members of the used absorbent article, is dehydrated and washed with a solution comprising a dehydrating agent and an oxidizing agent. The mixture comprising the superabsorbent polymer, the pulp fiber, and the plastic material, which are constituent members of the used absorbent article, is not particularly limited as long as it comprises the superabsorbent polymer, the pulp fiber, and the plastic material of the used absorbent article, and may or may not have been subjected to the crushing step S1 and/or the pretreatment step S2, in the same manner as the case of the mixture comprising the superabsorbent polymer and the pulp fiber described above.

The solution comprising a dehydrating agent and an oxidizing agent may be composed solely of the dehydrating agent and the oxidizing agent, or may comprise another solvent, such as an organic solvent or water, as long as such a solvent does not affect dehydration and oxidation. The total ratio of the dehydrating agent and the oxidizing agent in the solution is, for example, 50% by mass or more. From the viewpoint of the dehydration and oxidation effects, a higher ratio is preferable, and thus, the ratio is preferably 70% by mass or less, more preferably 80% by mass or less, and further preferably 90% by mass or less. When water is included as another solvent, the ratio of water is preferably 10% by mass or less, more preferably 5% by mass or less, and further preferably 1% by mass or less.

The dehydrating agent is not particularly limited as long as it is resistant to oxidation by the oxidizing agent and is capable of dehydrating the superabsorbent polymer and the pulp fiber included in the used absorbent article. The dehydrating agent is, for example, a liquid, which is considered to be able to dehydrate the constituent member by dissolving the moisture contained in the constituent member into itself, and also remove contaminants by dissolving the contaminants into itself. However, the mechanism is not limited to this.

Examples of dehydrating agents include organic solvents. Examples of organic solvents include hydrophilic organic solvents and polar organic solvents. Examples of organic solvents belonging to at least one thereof include ketone-based organic solvents and alcohol-based organic solvents. Examples of other organic solvents include fluorine-based organic solvents. Examples of ketone-based organic solvents include acetone. Acetone dissolves water well, is resistant to oxidation by oxidizing agents, and has the property of protecting functional groups. Thus, acetone can dehydrate the superabsorbent polymer and the pulp fiber while suppressing the decomposition (dissolution) of the constituent member, in particular, the superabsorbent polymer which is readily decomposable, and can remove some or all of the contaminants contained in each of the constituent members. When the dehydrating agent is an organic solvent, the adhesive bonding the constituent members of the used absorbent article can be dissolved, facilitating separation of the constituent members from each other. Examples of alcohol-based organic solvents include ethanol and methanol. Examples of the fluorine-based organic solvent include 1-chloro-2,3,3-trifluoropropene and 1,1,1,3,3-pentafluorobutane.

The ratio of the dehydrating agent in the solution is, for example, 50% by mass or more. From the viewpoint of the effects of dehydration and removal of contaminants, the ratio of the dehydrating agent in the solution is preferably higher, and when the oxidizing agent is a gas, the ratio is preferably 70% by mass or more, and more preferably 90% by mass or more.

The oxidizing agent is not particularly limited as long as it can remove contaminants contained in the used absorbent article while suppressing the impact on the constituent member (for example, oxidative decomposition of the superabsorbent polymer, damage to the pulp fiber). The oxidizing agent is, for example, a liquid or a gas mixed with a liquid, which is considered to reduce contaminants by oxidatively decomposing the contaminants, reducing their molecular weight, and making the contaminants more soluble in the solution. However, the mechanism is not limited to this.

Examples of oxidizing agents include ozone, hydrogen peroxide, and chlorine-based substances (for example, chlorine), or a combination of two or more of these. These oxidizing agents have relatively high oxidizing power, facilitating the reduction of contaminants contained in the constituent member of the used absorbent article, such as the superabsorbent polymer, the pulp fiber, and the plastic material. This allows for the removal of bacteria and the reduction of odorous and colored substances, enabling the sterilization, deodorization, and decolorization (bleaching) of the constituent member. When acetone is used as the dehydrating agent, hydrogen peroxide is not used as the oxidizing agent.

The oxidizing agent may be mixed with the liquid of the dehydrating agent, or may be mixed into another solvent (for example, an organic solvent, water) and then mixed with the dehydrating agent.

When gaseous ozone is used as the oxidizing agent and gaseous ozone is supplied to a dehydrating agent to form a solution comprising the dehydrating agent and the oxidizing agent, the ozone concentration in the solution is not particularly limited as long as such concentration can reduce contaminants contained in the constituent member. The ozone concentration is, for example, 0.2 to 2 ppm by mass, and preferably 0.4 to 1.5 ppm by mass. By setting the concentration to 0.2 ppm by mass or more, contaminant reduction is facilitated, and by setting the concentration to 2 ppm by mass or less, oxidative decomposition of the superabsorbent polymer and damage to the pulp fiber can be suppressed. The contact time between the solution comprising ozone and the constituent member is not particularly limited, as long as it is a time sufficient to reduce contaminants contained in the constituent member. Generally, the contact time is shorter when the ozone concentration is high and longer when the ozone concentration is low. The contact time is, for example, 1 to 200 minutes, and preferably 2 to 60 minutes. The product of the ozone concentration (ppm by mass) and the contact time (minutes) (hereinafter also referred to as the "CT value") is preferably 0.2 to 40 ppm by mass-min, and more preferably 0.5 to 20 ppm by mass-min. By setting the CT value to 0.2 ppm by mass-min or more, the reduction of contaminants is facilitated, and by setting the CT value to 40 ppm by mass-min or less, oxidative decomposition of the constituent member, and in particular, the superabsorbent polymer which is readily decomposable, can be suppressed. Treatment with ozone can reduce contaminants contained in the constituent member, for example, remove bacteria and reduce odorous and colored substances, enabling the sterilization, deodorization, and decolorization (bleaching) of the constituent member. Examples of ozone generators for supplying gaseous ozone into the dehydrating agent include the ED-OWX-2 Ozone Water Exposure Tester manufactured by Eco Design Inc., the OS-25V Ozone Generator manufactured by Mitsubishi Electric Corporation, and the REX MC Ozonizer MC-985S manufactured by Rex Industrial Co., Ltd.

When a gas (for example, ozone) is used as the oxidizing agent, the oxidizing agent may be supplied to the dehydrating agent by, for example, the following method. In this method, a predetermined amount of oxidizing agent is generated in an oxidizing agent generator, and the oxidizing agent is continuously supplied to the dehydrating agent in a treatment tank at a predetermined air flow rate, while the waste oxidizing agent (used oxidizing agent) is continuously discharged (exhausted) to the outside of the treatment tank at the same air flow rate. In this case, a flow of oxidizing agent is easily generated, fresh oxidizing agent is easily supplied to the surface of the constituent member, and reactants are easily and continuously carried away from the surface. As a result, the oxidation reaction on the surface of the constituent member can more reliably proceed.

Alternatively, the oxidizing agent may comprise either an active species generated by irradiating another oxidizing agent included in the solution with ultraviolet rays, or, when the solution comprises water, an active species generated by irradiating the water and/or another oxidizing agent included in the solution with ultraviolet rays. For example, when the wavelength of ultraviolet rays is 253.7 nm, the active species generated by the reaction of ultraviolet rays with an oxidizing agent (ozone + water, hydrogen peroxide), i.e., hydroxyl radicals, can decompose at least a portion of contaminants (organic substances). When the wavelength of ultraviolet rays is 184.9 nm, the active species generated by the reaction of ultraviolet rays with water, i.e., hydroxyl radicals, can decompose at least a portion of contaminants (organic substances).

The ratio of the used absorbent article (or plurality of small pieces) in the solution is not particularly limited as long as the dehydration and washing step S3 can be performed. Examples of the ratio include 0.1 to 20% by mass, and preferably 1 to 10% by mass. By setting the ratio to 0.1% by mass or more, treatment can proceed efficiently. By setting the ratio to 20% by mass or less, dehydration and washing can easily proceed.

Contaminants such as excrement, sebum, bacteria, odorous substances, and colored substances derived therefrom, machine oil from production equipment, and various organic substances are thought to be reduced as follows. Specifically, through dehydration, contaminants absorbed inside the constituent member are primarily expelled to the outside along with moisture. At this time, contaminants attached to the constituent member are expelled along with the released moisture. Simultaneously, through oxidation, contaminants attached to the constituent member (including those expelled from the inside and attached) are primarily oxidatively decomposed, reduced in molecular weight, solubilized, and removed. This also enables sterilization, deodorization, and bleaching of the constituent member. However, the reduction of contaminants in the constituent member described above is not limited to this mechanism.

In the dehydration and washing step S3, the temperature for dehydration and washing is not particularly limited as long as the dehydration and washing treatment can be performed, and this step is performed at least at a temperature lower than the boiling point of the dehydrating agent. Examples of the temperature for dehydration and washing include room temperature (for example, 25°C) to 50°C, and preferably 30 to 40°C. By setting the temperature to equal to or higher than room temperature, the time required for dehydration and washing can be easily shortened. By setting the temperature to 50°C or less, suppression of evaporation (boiling) of the organic solvent and suppression of dehydration condensation of the acid groups of the superabsorbent polymer are facilitated, whereby a decrease in water absorption is inhibited. The time for dehydration and washing is not particularly limited as long as the dehydration and washing treatment can be performed, and can be, for example, 1 to 200 minutes.

The specific configuration of the device for performing the dehydration and washing step S3 is not particularly limited, as long as it can bring into contact (or immerse) the mixture comprising the constituent members of the used absorbent article (for example, the superabsorbent polymer, the pulp fiber, and the plastic material) with a solution comprising a dehydrating agent and an oxidizing agent. The device comprises, for example, a tank in which the used absorbent article (or a crushed used absorbent article) can be placed and which can store a solution comprising a dehydrating agent and an oxidizing agent, a supply means which can supply the dehydrating agent and the oxidizing agent into the tank, and a stirring means which can stir the solution in the tank.

In the present method, when the acidic aqueous solution treatment is performed as the pretreatment step S2 and the reactivation treatment is performed during the dehydration and washing step S3, it is preferable that the solution comprising an oxidizing agent and a dehydrating agent in the dehydration and washing step S3 contain as little unnecessary moisture as possible (except for moisture released from the used absorbent article). An aqueous solution comprising an alkali metal ion supply source is supplied to that solution separately from the oxidizing agent and dehydrating agent. As a result, the reactivation treatment is performed while the dehydration and washing step S3 is being performed. In this case, the solution comprising the oxidizing agent and dehydrating agent may be supplied with the aqueous solution comprising the alkali metal ion supply source, and the used absorbent article (or a crushed used absorbent article) may then be supplied. Alternatively, the used absorbent article may be supplied to the solution comprising the oxidizing agent and dehydrating agent, and after a predetermined time has elapsed, the aqueous solution comprising the alkali metal ion supply source may then be supplied.

In the present method, when the polyvalent metal salt treatment is performed as the pretreatment step S2 and the acidic substance substitution treatment is performed during the dehydration and washing step S3, it is preferable that the solution comprising an oxidizing agent and the dehydrating agent in the dehydration and washing step S3 contain as little moisture as possible (except for moisture released from the used absorbent article). An aqueous solution comprising the acidic substance is supplied to that solution separately from the oxidizing agent and dehydrating agent. Thus, the acidic substance substitution treatment is performed while the dehydration and washing step S3 is being performed. In this case, the aqueous solution comprising the acidic substance may be supplied to the solution comprising an oxidizing agent and a dehydrating agent, and the used absorbent article (or a crushed used absorbent article) may then be supplied. Alternatively, the used absorbent article may be supplied to the solution comprising the oxidizing agent and dehydrating agent, and after a predetermined time has elapsed, the aqueous solution comprising the acidic substance may then be supplied.

When the polyvalent metal salt treatment is performed as the pretreatment step S2 and the alkaline substance neutralization treatment is performed during the dehydration and washing step S3 after the acidic substance substitution treatment, it is preferable that the solution comprising an oxidizing agent and a dehydrating agent in the dehydration and washing step S3 contain as little unnecessary moisture as possible (except for moisture released from the used absorbent article). An aqueous solution comprising an alkaline substance comprising sodium is supplied to that solution, separately from the oxidizing agent and dehydrating agent. Thus, the alkaline substance neutralization treatment is performed while the dehydration and washing step S3 is being performed. In this case, the solution comprising an oxidizing agent and a dehydrating agent may be supplied with an aqueous solution comprising an alkaline substance comprising sodium, and the used absorbent article (or a crushed used absorbent article) may then be supplied. Alternatively, the used absorbent article may be supplied to the solution comprising the oxidizing agent and dehydrating agent, and after a predetermined time has elapsed, the aqueous solution comprising an alkaline substance comprising sodium may then be supplied.

When both the acidic substance substitution treatment and the alkaline substance neutralization treatment are performed during the dehydration and washing step S3, first, the used absorbent article (or a crushed used absorbent article) is supplied to the solution comprising an oxidizing agent and a dehydrating agent, and the dehydration and washing treatment is performed for a predetermined time (for example, 1 to 30 minutes). Next, the aqueous solution comprising an acidic substance is supplied to that solution, and the acidic substance substitution treatment is performed for a predetermined time (for example, 1 to 30 minutes). Next, the aqueous solution comprising an alkaline substance comprising sodium is supplied to that solution, and the alkaline substance neutralization treatment is performed for a predetermined time (for example, 1 to 30 minutes).

The separation step S4 is a step of separating at least the superabsorbent polymer and the pulp fiber from the solution comprising the mixture that comprises the superabsorbent polymer and the pulp fiber. In this separation step S4, the solution comprising the mixture that comprises the superabsorbent polymer and the pulp fiber is separated into the pulp fiber and the superabsorbent polymer and a solution comprising contaminants and other materials. As a result, the pulp fiber and superabsorbent polymer, which have been dehydrated and washed and have had contaminants and other materials reduced therefrom, are separated and collected together, for example.

The specific configuration of the device for performing the separation step S4 is not particularly limited, as long as it can separate the solution comprising the mixture that comprises the superabsorbent polymer and the pulp fiber into the pulp fiber and the superabsorbent polymer and a solution comprising contaminants and other materials. Examples of the device include a device comprising a screen which does not allow the superabsorbent polymer and the pulp fiber to pass through but allows the solution (comprising contaminants and other materials (small foreign matter)) to pass through. When the mixture comprises other materials (large foreign matter) which are larger than the superabsorbent polymer and the pulp fiber, the device needs only to further comprise a screen which allows the superabsorbent polymer and the pulp fiber to pass through but does not allow such other materials (large foreign matter) to pass through.

When the pulp fiber and the superabsorbent polymer have been separated and collected together, the pulp fiber and the superabsorbent polymer can be easily reused together as materials for a single product. Such products include absorbent sheets, absorbent bodies, cat litter, soil-modifying materials, and solid fuel. The superabsorbent polymer and the pulp fiber that have been separated together may be further separated from each other using a screen or similar device.

Absorbent sheets, which are absorbent articles, are formed by, for example, using the pulp fiber and superabsorbent polymer that have been separated and collected together as-is or such pulp fiber and superabsorbent polymer mixed with an unused absorbent material to form an absorbent material, and placing the absorbent material between a top sheet and a back sheet. Absorbent bodies are formed by, for example, using the pulp fiber and superabsorbent polymer that have been separated and collected together as-is or such pulp fiber and superabsorbent polymer mixed with an unused absorbent material to form an absorbent material, and then wrapping the absorbent material with a core wrap sheet. Cat litter, which is a water-absorbent granular material, is formed by, for example, molding the pulp fiber and superabsorbent polymer that have been separated and collected together into granules with molten resin. For soil-modifying materials, which impart water-retentive properties to soil, for example, the pulp fiber and superabsorbent polymer that have been separated and collected together are spread on the soil as-is, or placed on the soil in the form of an absorbent sheet. Solid fuel, which is a solid fuel itself, is formed by melting and molding the pulp fiber and superabsorbent polymer that have been separated and collected together with a flammable resin.

The solution described above may further comprise a plastic material, which is the constituent member of the used absorbent article. In this case, the separation step S4 is a step of separating the superabsorbent polymer, the pulp fiber, and the plastic material from the solution comprising the mixture that comprises the superabsorbent polymer, the pulp fiber, and the plastic material, which are constituent members of the used absorbent article. As a result, the pulp fiber, the superabsorbent polymer, and the plastic material, which have been dehydrated and washed and have had contaminants and other materials reduced, are separated and collected together, for example. An example of a device which can achieve this is a device comprising one or more screens as described above.

When the pulp fiber, the superabsorbent polymer, and the plastic material have been separated and collected together, the pulp fiber, the superabsorbent polymer, and the plastic material can easily be reused together as materials for a single product. Examples of such products include cat litter, building materials (including sound-absorbing materials and cement material), injection-molded products, and solid fuel. The plastic material may be further separated from the pulp fiber, superabsorbent polymer, and plastic material that have been separated together using a screen or similar device. As a result, the plastic material can be used individually (for example, in bags produced using the inflation method).

Cat litter is formed by, for example, among the pulp fiber, the superabsorbent polymer, and the plastic material that have been separated and collected together, melting the plastic material, and molding the pulp fiber, the superabsorbent polymer, and the plastic material together into granules. Sound-absorbing material, which is a bag or plate-shaped product produced by packing sound-absorbing granules (such as the plastic material) to a certain thickness, is formed by, for example, among the pulp fiber, the superabsorbent polymer, and the plastic material that have been separated and collected together (with a resin being optionally added), melting the plastic material, and molding the pulp fiber, the superabsorbent polymer, and the plastic material together into granules or a plate. Cement material, which is a material for concrete and mortar, is formed by mixing all or part of the pulp fiber, the superabsorbent polymer, and the plastic material that have been separated and collected together into cement. An injection-molded product, which is produced by injection-molding, is formed by, for example, melting and injection-molding the pulp fiber, superabsorbent polymer, and plastic material that have been separated and collected together (with a resin being optionally added). Solid fuel is formed by, for example, melting and molding the pulp fiber, superabsorbent polymer, and plastic material that have been separated and collected together (with a flammable resin being optionally added).

The drying step S5 is a step of drying at least the superabsorbent polymer and pulp fiber separated in the separation step S5.

The drying step S5 is performed by placing the constituent member in a dry atmosphere at a temperature higher than room temperature, or by blowing dry air at a temperature higher than room temperature onto the constituent member. The drying temperature can be, for example, 40 to 110°C, and is preferably 50 to 100°C. By setting the drying temperature to 40°C or higher, the drying time can be shortened. By setting the drying temperature to 110°C or lower, the constituent members can be prevented from sticking to each other and from deteriorating due to heat. The drying time can be, for example, 30 to 300 minutes. The drying step S5 may be performed under reduced pressure, for example, at 0.1 to 100 kPa, in order to accelerate drying.

The drying step S5 is performed after the dehydration and washing step S3 and at least one of before the separation step S4 and after the separation step S4. In cases in which the use of a dehydrating agent in the dehydration and washing step S3 facilitates drying of the constituent member, the drying step S5 can be omitted.

The present method may comprise a resupply step in which the dehydrating agent (for example, the organic solvent) is collected from the solution after the separation step S4 and supplied to the dehydration and washing step S3. In this resupply step, the dehydrating agent in the solution from which at least the superabsorbent polymer and pulp fiber have been separated in the separation step S4 is collected, with contaminants being reduced as necessary, is supplied to the dehydration and washing step S3.

For example, the solution from which at least the superabsorbent polymer and the pulp fiber have been separated contains contaminants such as excrement in addition to the dehydrating agent. Thus, the solution is heated and/or depressurized to boil and evaporate the dehydrating agent included in the solution. The dehydrating agent is then collected by cooling the vapor. Specifically, the dehydrating agent is distilled. As a result, the contaminants in the collected dehydrating agent are reduced. The dehydrating agent is then resupplied to the dehydration and washing step S3.

Thus, in the present method of collecting a constituent member of a used absorbent article, a dehydrating agent and an oxidizing agent are simultaneously used in the dehydration and washing step S3 to simultaneously dehydrate and wash at least each of the superabsorbent polymer having an acid group and the pulp fiber. Therefore, first, the dehydrating agent can remove the moisture which has been absorbed by each of the superabsorbent polymer and the pulp fiber and which may contain contaminants. Simultaneously, the oxidizing agent can reduce the contaminants contained in each of the superabsorbent polymer and the pulp fiber (for example, excrement, sebum, bacteria, odorous substances, colored substances derived therefrom, machine oil from production equipment, various organic substances, etc.). As a result, contaminants in at least each of the superabsorbent polymer and the pulp fiber can be reduced. Furthermore, by simultaneously performing dehydration and washing to suppress an increase in the number of steps, increases in cost associated with these treatments can be suppressed. Therefore, in the method of collecting a constituent member of a used absorbent article, contaminants in the constituent member can be reduced while suppressing increases in cost.

As a preferable aspect of the present method, the oxidizing agent in the dehydration and washing step S3 comprises at least one among ozone, hydrogen peroxide, and a chlorine-based substance, which have strong oxidizing power, whereby the contaminants contained in each of the superabsorbent polymer and pulp fiber can more reliably be reduced.

As a preferable aspect of the present method, the dehydrating agent in the dehydration and washing step S3 comprises a ketone-based organic solvent, which is resistant to oxidation even by a highly oxidizing agent. As a result, the moisture which has been absorbed by each of the superabsorbent polymer and the pulp fiber and which may contain contaminants can more reliably be removed without being affected by the oxidizing power of the oxidizing agent.

As another preferable aspect of the present method, the oxidizing agent in the dehydration and washing step S3 comprises a highly oxidizing active species, i.e., an active species (for example, hydroxyl radicals) generated by irradiating another oxidizing agent included in the solution with ultraviolet rays, and when the solution comprises water, an active species (for example, hydroxyl radicals) generated by irradiating the water and/or another oxidizing agent included in the solution with ultraviolet rays. As a result, contaminants contained in each of the superabsorbent polymer and the pulp fiber can more reliably be reduced.

As a preferable aspect of the present method, the superabsorbent polymer and the pulp fiber to be separated together in the separation step S4 have already been dehydrated and washed together in the dehydration and washing step S3. Thus, by separating the superabsorbent polymer and the pulp fiber from each other, the reusable superabsorbent polymer and pulp fiber can be obtained without further washing. Specifically, a superabsorbent polymer and a pulp fiber each with reduced contaminants can be obtained while suppressing an increase of a washing step and thus cost.

As another preferable aspect of the present method, the superabsorbent polymer, the pulp fiber, and the plastic material to be separated together in the separation step S4 have already been dehydrated and washed in the dehydration and washing step S3. Thus, by separating at least the plastic material from the superabsorbent polymer, the pulp fiber, and the plastic material, a reusable plastic material can be obtained without further washing. Specifically, a plastic material with reduced contaminants can be obtained while suppressing increases in cost.

As a preferable aspect of the present method, the pretreatment step S2, in which the moisture absorbed by the used absorbent article is reduced, is provided before the dehydration and washing step S3. Thus, the amount of moisture in the used absorbent article that must be treated in the dehydration and washing step S3 can be reduced in advance in the pretreatment step S2. As a result, contaminants contained in each of the superabsorbent polymer and the pulp fiber can more reliably be reduced in the dehydration and washing step S3.

As a preferable aspect of the present method, at least one of an acidic aqueous solution treatment, a polyvalent metal salt treatment, a high-pressure steam treatment, freeze-drying treatment, and an organic solvent treatment is performed on the used absorbent article as the pretreatment step S2 before the dehydration and washing step S3. As a result, the moisture in the used absorbent article that must be treated in the dehydration and washing step S3 can more reliably be reduced in advance in the pretreatment step S2.

As a preferable aspect of the present method, the acidic aqueous solution treatment step is performed as the pretreatment step S2, whereby the superabsorbent polymer can be inactivated with an acidic aqueous solution, thereby enabling more appropriate reduction (removal) of the moisture absorbed by the superabsorbent polymer. Specifically, the amount of moisture in the used absorbent article that must be treated in the dehydration and washing step S3 can more appropriately be reduced in advance. Additionally, by using an alkali metal ion supply source in the dehydration and washing step S3, the superabsorbent polymer can be reactivated with alkali metal ions while remaining in a dehydrated state. Since the reactivated superabsorbent polymer has not absorbed moisture, subsequent handling can be simplified, for example, drying thereof can easily be performed. As a result, a reactivated superabsorbent polymer in which contaminants are reduced can be obtained while suppressing increases in cost.

As another preferable aspect of the present method, the polyvalent metal salt treatment is performed as the pretreatment step S2, whereby the superabsorbent polymer can be inactivated with the polyvalent metal ions, and moisture absorbed by the superabsorbent polymer can more appropriately be reduced (removed). Specifically, the amount of moisture in the used absorbent article that must be treated in the dehydration and washing step S3 can more appropriately be reduced. Additionally, the polyvalent metal ions in the superabsorbent polymer are substituted with an acidic substance (acidic aqueous solution) before or during the dehydration and washing step S3, and thereafter, during the dehydration and washing step S3, the superabsorbent polymer in which the polyvalent metal ions have been substituted with the acidic substance is neutralized with an alkaline substance (alkaline aqueous solution) comprising sodium, whereby the inactivated superabsorbent polymer can be reactivated in addition to being dehydrated and washed. As a result, a reactivated superabsorbent polymer in which contaminants are reduced can be obtained while suppressing increases in cost.

As a preferable aspect of the present method, the crushing step of crushing the used absorbent article is performed before the separation step S4, and before, during, or after the dehydration and washing step S3. As a result, at least the superabsorbent polymer and the pulp fiber can more reliably be separated from the solution comprising the mixture in the separation step S4.

As a preferable aspect of the present method, the drying step S5, in which the superabsorbent polymer and the pulp fiber are dried, is performed at least one of after the dehydration and washing step S3 and after the separation step S4. Therefore, since the superabsorbent polymer and pulp fiber are dehydrated in advance in the dehydration and washing step S3, facilitating drying, the energy required for drying can be reduced, and the superabsorbent polymer and the pulp fiber can easily be treated in subsequent steps or reused. As a result, the treatment burden in the subsequent steps and treatment cost can be reduced.

As a preferable aspect of the present method, there is further provided a step of collecting the dehydrating agent from the solution after the separation step S4 and supplying the dehydrating agent to the dehydration and washing step S3. As a result, in the method of collection of a constituent member of a used absorbent article, contaminants can be reduced while suppressing increases in cost.

### EXAMPLES

The present invention will be described below based on Examples, but the present invention is not limited to these Examples. In the following Examples, the dehydration and washing step S3 was examined.

### (1) Sample 1

### (a) For Dehydrating Agent Stability Test

0.1 g of a commercially available superabsorbent polymer (polyacrylate-based) was prepared, and the superabsorbent polymer was allowed to absorb 50 ml of distilled water to prepare Sample A. A plurality of Samples A were produced in the same manner.

### (b) For Contaminant Removability Test

10 g of a superabsorbent polymer (having odor and color) extracted from a used absorbent article comprising excrement was prepared and designated Sample B. A plurality of Sample B were prepared in the same manner.

### (2) Evaluation Method

### (a) Dehydrating Agent Stability Test

### (a-1) Dehydration Test

Acetone was prepared as a dehydrating agent.

Example 1: One Sample A was immersed in 200 ml of acetone in a vessel (a 500 ml three-necked flat-bottom flask reactor manufactured by Deschem; the same applies hereinafter) for 3 hours, and the wet weight and the dry weight thereof were then measured.

Comparative Example 1: One Sample A was immersed in 200 ml of distilled water in a vessel for 3 hours, and the wet weight and the dry weight thereof were then measured.

### (a-2) Oxidation Test

Ozone was prepared as an oxidizing agent.

Example 2: One Sample A was immersed in 200 ml of acetone in a vessel, and ozone was supplied to the vessel such that the ozone generation rate was 60 mg/h and the gas flow rate was 13 L/min. The waste ozone was continuously discharged at the same gas flow rate to the outside of the vessel. One hour after the start of ozone supply, the wet weight and the dry weight of the Sample A were measured.

Example 3: One Sample A was immersed in 200 ml of acetone in a vessel, and ozone was supplied to the vessel such that the ozone generation rate was 60 mg/h and the gas flow rate was 13 L/min. The waste ozone was continuously discharged at the same gas flow rate to the outside of the vessel. Three hours after the start of ozone supply, the wet weight and the dry weight of the Sample A were measured.

Comparative Example 2: One Sample A was immersed in 200 ml of distilled water in a vessel, and ozone was supplied to the vessel such that the ozone generation rate was 60 mg/h and the gas flow rate was 13 L/min. The waste ozone was continuously discharged at the same gas flow rate to the outside of the vessel. Three hours after the start of ozone supply, the wet weight and the dry weight of the Sample A were measured.

The ozone was supplied using an ozone generator: REX MC Ozonizer MC-985S manufactured by Rex Industrial Co., Ltd. (the same applies below). The concentration of dissolved ozone in the acetone could not be measured, but was considered to be in the range of approximately 0.2 to 2 ppm by mass.

### (b) Contaminant Removability Test

Acetone was prepared as the dehydrating agent and ozone was prepared as the oxidizing agent.

Example 4: One Sample B was immersed in 250 ml of acetone in a vessel, and ozone was supplied to the vessel such that the ozone generation rate was 60 mg/h and gas flow rate was 13 L/min. The waste ozone was continuously discharged at the same gas flow rate to the outside of the vessel. One hour after the start of ozone supply, the Sample B was measured to determine whether odorous substances had been removed (presence or absence of odor) and whether colored substances had been removed (presence or absence of decolorization).

Comparative Example 3: One Sample B was immersed in 250 ml of acetone in a vessel, and ozone was not supplied to the vessel. After 1 hour, the Sample B was measured to determine whether odorous substances had been removed (presence or absence of odor) and whether colored substances had been removed (presence or absence of decolorization).

Comparative Example 4: One Sample B was immersed in 250 ml of distilled water in a vessel, and ozone was not supplied to the vessel. After 1 hour, the Sample B was measured to determine whether odorous substances had been removed (presence or absence of odor), and whether colored substances had been removed (presence or absence of decolorization).

Comparative Example 5: One Sample B was immersed in 250 ml of distilled water in a vessel, and ozone was supplied to the vessel such that the ozone generation rate was 60 mg/h and the gas flow rate was 13 L/min. The waste ozone was continuously discharged at the same gas flow rate to the outside of the vessel. One hour after the start of ozone supply, the Sample B was measured to determine whether odorous substances had been removed (presence or absence of odor) and whether colored substances had been removed (presence or absence of decolorization).

Regarding the sample (superabsorbent polymer), whether odorous substances of the sample had been removed (presence or absence of odor) was confirmed by an examiner smelling and comparing the odor of Sample B before and after the contaminant removability test. Whether colored substances of the sample had been removed (presence or absence of decolorization) was confirmed by an examiner visually observing and comparing the color of Sample B before and after the contaminant removability test.

### (3) Evaluation Results

### (a) Dehydrating Agent Stability Test

The evaluation results are summarized in Table 1 below.

### (a-1) Dehydration Test

The wet weight of the superabsorbent polymer was initially 50.1 g, and was 48 g in Comparative Example 1, showing little change, but decreased significantly to 0.47 g in Example 1. From this comparison of the wet weights of Example 1 and Comparative Example 1, it was confirmed that the superabsorbent polymer was dehydrated by using acetone as a dehydrating agent.

### (a-2) Oxidation Test

The dry weight of the superabsorbent polymer was initially 0.10 g, and was 0.073 g in Comparative Example 1, showing little change. In Examples 1 to 3, it was 0.070 g, 0.070 g, and 0.067 g, respectively, showing little change. From this comparison of the dry weights of Examples 1 to 3 and Comparative Example 1, it was confirmed that the superabsorbent polymer was not oxidatively decomposed by using acetone as the dehydrating agent even when ozone was used as the oxidizing agent. Conversely, the wet and dry weights of Comparative Example 2 were 11 g and 0.034 g, respectively, significantly decreased compared to the wet and dry weights of Comparative Example 1 (48 g and 0.073 g). From this comparison of the wet and dry weights of Comparative Examples 1 and 2, it was confirmed that the superabsorbent polymer was oxidatively decomposed in distilled water at the ozone concentrations used in the Examples. Thus, it was confirmed that when ozone was used in distilled water, a portion of the superabsorbent polymer was oxidatively decomposed, but when the same concentration of ozone was used in acetone, the superabsorbent polymer was not oxidatively decomposed. Furthermore, the wet weight of the superabsorbent polymer was initially 50.1 g, and was 48 g in Comparative Example 1, showing little change, whereas it decreased significantly to 0.47 g, 0.58 g, and 0.41 g, respectively, in Examples 1 to 3. From this comparison of the wet weights of Examples 1 to 3 and Comparative Example 1, it was confirmed that by using acetone as the dehydrating agent, even when ozone was used as the oxidizing agent, dehydration was achieved to the same extent as when ozone was not used as the oxidizing agent.

**[Table 1]**

| | Blan k | Acetone | | | Distilled water | |
|---|---|---|---|---|---|---|
| | | Ex 1 | Ex 2 | Ex 3 | Comp Ex 1 | Comp Ex 2 |
| Ozone | - | Absent | Present (1h) | Present (3h) | Absent | Present (3h) |
| Wet weight (g) | (50.1 ) | 0.47 | 0.58 | 0.41 | 48 | 11 |
| Dry weight (g) | (0.10 ) | 0.070 | 0.070 | 0.067 | 0.073 | 0.034 |

### (b) Contaminant Removability Test

The evaluation results are summarized in Table 2 below. In Table 2, "Good" indicates that deodorization or decolorization was achieved, and "Poor" indicates that deodorization or decolorization was not achieved. Regarding the deodorization and decolorization of the superabsorbent polymer, in Example 4, both deodorization and decolorization were good (Good), whereas in Comparative Example 3, deodorization was achieved (Good) but decolorization was not (Poor). In Comparative Example 4, neither deodorization nor decolorization was achieved (Poor). Comparative Example 5 could not be evaluated because the superabsorbent polymer decomposed. From the comparison of Example 4 and Comparative Examples 3 to 5, it was confirmed that when acetone was used as the dehydrating agent and ozone was used as the oxidizing agent, the odor of the superabsorbent polymer was removed (deodorization) and the coloration of the superabsorbent polymer was removed (decolorization). However, when acetone was used as the dehydrating agent without the use of an oxidizing agent, deodorization of the superabsorbent polymer was achieved, but decolorization thereof was not achieved.

**[Table 2]**

| | Blank | Acetone | | Distilled Water | |
|---|---|---|---|---|---|
| | | Ex 4 | Comp Ex 3 | Comp Ex 4 | Comp Ex 5 |
| Ozone | - | Present (1h) | Absent | Absent | Present (1h) |
| Deodorizatio n | Odor present | Good | Good | Poor | (SAP decomp) |
| Decolorizatio n | Color present | Good | Poor | Poor | (SAP decomp) |

Good results were obtained regarding deodorization and decolorization, i.e., the reduction of odorous and colored substances in contaminants. Because these odorous and colored substances are contaminants which are difficult to remove, it is believed that other contaminants, such as excrement, sebum, bacteria derived therefrom, machine oil from production equipment, and various organic substances, can also be removed or reduced in the same manner. Though details are omitted, the same dehydration results were obtained with the pulp fiber as with the superabsorbent polymer. Furthermore, the same deodorization and decolorization results were obtained with the pulp fiber and the plastic material as with the superabsorbent polymer.

### <Wet Weight Measurement Method>

The wet weight was measured as follows:
(1) A bag formed of a PE mesh sheet (PE200, Sanplatec, opening 102 µm) was prepared, and the mass A of the bag was measured.
(2) The superabsorbent polymer that had absorbed water to be measured was placed in the PE mesh sheet bag, the bag was lifted, and the bag was allowed to stand on a draining net for 15 minutes to drain the water.
(3) The mass B of the PE mesh sheet bag (comprising the superabsorbent polymer) after draining the water in (2) above was measured.
(4) The wet weight of the superabsorbent polymer that had absorbed water to be measured was measured by the formula (mass B - mass A).

### <Dry Weight Measurement Method>

The dry weight was measured as follows:
(1) The superabsorbent polymer in the PE mesh sheet bag obtained by the wet weight measurement method described above was transferred to a heat-resistant vessel.
(2) The vessel (comprising the superabsorbent polymer) was allowed to stand in an atmosphere at 105°C for 3 hours to completely dry the superabsorbent polymer.
(3) The mass of the dried superabsorbent polymer was measured and used as the dry weight.

The collection method of the present invention is not limited to the embodiments described above, and suitable combinations and modifications can be made without departing from the purpose and spirit of the present invention.

### DESCRIPTION OF REFERENCE SIGNS

- S3: dehydration and washing step
- S4: separation step

## Claims

1. A method of collecting a constituent member of a used absorbent article, the method comprising:
a dehydration and washing step of dehydrating and washing a mixture comprising a superabsorbent polymer having an acid group, and a pulp fiber, each being the constituent member, with a solution comprising a dehydrating agent capable of dehydrating the superabsorbent polymer and the pulp fiber and an oxidizing agent, and
a separation step of separating at least the superabsorbent polymer and the pulp fiber from the solution comprising the mixture.

2. The method according to claim 1, wherein the oxidizing agent comprises at least one among ozone, hydrogen peroxide, and a chlorine-based substance.

3. The method according to claim 1 or 2, wherein the dehydrating agent comprises a ketone-based organic solvent.

4. The method according to any one of claims 1 to 3, wherein the oxidizing agent comprises one of an active species generated by irradiating another oxidizing agent included in the solution with ultraviolet rays, and, an active species generated by, when the solution comprises water, irradiating the water and/or another oxidizing agent included in the solution with ultraviolet rays.

5. The method according to any one of claims 1 to 4, wherein the separation step comprises:
a step of separating the superabsorbent polymer and the pulp fiber together from the solution comprising the mixture, and
a step of further separating the superabsorbent polymer and the pulp fiber that have been separated together from each other.

6. The method according to any one of claims 1 to 5, wherein the dehydration and washing step comprises a step of dehydrating and washing the mixture, which further comprises a plastic material, which is the constituent member, with the solution, and
the separation step comprises a step of separating the plastic material from the solution comprising the mixture, separately from the superabsorbent polymer and the pulp fiber.

7. The method according to any one of claims 1 to 6, further comprising, before the dehydration and washing step, a pretreatment step of reducing moisture absorbed by the used absorbent article.

8. The method according to claim 7, wherein in the pretreatment step, at least one of an acidic aqueous solution treatment, a polyvalent metal salt treatment, a high-pressure steam treatment, a freeze-drying treatment, and an organic solvent treatment is performed on the used absorbent article.

9. The method according to claim 8, wherein the pretreatment step comprises a step of performing the acidic aqueous solution treatment on the used absorbent article to inactivate the superabsorbent polymer with an acidic aqueous solution, and
the dehydration and washing step comprises a step of activating the inactivated superabsorbent polymer with alkali metal ions supplied from an alkali metal ion supply source.

10. The method according to claim 8, wherein the pretreatment step comprises a step of performing the polyvalent metal salt treatment on the used absorbent article to inactivate the superabsorbent polymer with polyvalent metal ions supplied from a polyvalent metal salt,
the method further comprising:
before the dehydration and washing step or during the dehydration and washing step, a step of substituting the polyvalent metal ions with an acidic substance, in the inactivated superabsorbent polymer, and
during the dehydration and washing step, a step of neutralizing, using an alkaline substance comprising sodium, the superabsorbent polymer in which the polyvalent metal ions have been substituted with the acidic substance.

11. The method according to any one of claims 1 to 10, further comprising a crushing step of crushing the used absorbent article, wherein
the crushing step is performed before the separation step and any of before, during and after the dehydration and washing step.

12. The method according to any one of claims 1 to 11, further comprising a drying step of drying at least the superabsorbent polymer and the pulp fiber, wherein
the drying step is performed at least one of after the dehydration and washing step and after the separation step.

13. The method according to any one of claims 1 to 12, further comprising a resupply step of collecting the dehydrating agent from the solution after the separation step and supplying the dehydrating agent to the dehydration and washing step.
